# EUROPÄISCHE PATENTANMELDUNG

(11) **EP 0 886 073 A1**
(43) Veröffentlichungstag der Anmeldung: **23.12.1998**
(21) Anmeldenummer: 98202034.9
(22) Anmeldetag: 17.06.1998
(51) Int. Cl.: F16B 19/06, B25C 1/00

(54) **Stahlnagel sowie Schlagwerkzeug für denselben**

(30) Priorität: 18.06.1997 NL 1006348
(71) Anmelder: J.H. DE WIT EN ZONEN B.V., NL-5700 AB Helmond (NL)
(72) Erfinder: Thoolen, Wilhelm Franciscus, 6077 CG St. Odilienberg (NL)
(74) Vertreter: de Bruijn, Leendert C.

(57) **Zusammenfassung**

Ein Stahlnagel (1) mit Schaft (7), Kopf (6) und einem über einen Sollbruchbereich (15) abbrechbar mit dem Kopf verbundenen Festhalteteil (5), zu verwenden in der Kombination mit einem Schlagwerkzeug (2) mit an einem Ende eine Schlagfläche, worauf Schläge ausgeübt werden können mit zum Beispiel einem Hammer, und mit an dem anderen Ende einer mit einem Aufnahmeloch (8) versehenen Stützfläche (12), die auf dem Kopf des Nagels abgestützt werden kann und in welches Aufnahmeloch das Festhalteteil aufnehmbar ist, ist derart ausgeführt, daß der Sollbruchbereich des Nagels von einer im Grunde umlaufenden Verjüngung zwischen dem Festhalteteil und dem Kopf bestimmt ist.

## Beschreibung

Die Erfindung betrifft den Bereich eines Stahlnagels und des dazu gehörenden Schlagwerkzeugs. Bekannt ist ein Stahlnagel mit Schaft, Kopf und einem über einen Sollbruchbereich abbrechbar mit dem Kopf verbundenen Festhalteteil sowie ein Schlagwerkzeug mit an einem Ende einer Schlagfläche, worauf Schläge ausgeübt werden können mit zum Beispiel einem Hammer, und mit an dem anderen Ende einer mit einem Aufnahmeloch versehenen Stützfläche, die auf dem Kopf des Nagels abgestützt werden kann und in welches Aufnahmeloch das Festhalteteil aufnehmbar ist.

Ein solcher Stahlnagel kann mittels des Schlagwerkzeugs in zuverlässiger Weise auch in harten Untergrund eingetrieben werden. Die Gefahr, daß der Nagel beim Hereinschlagen wegspringt, ist erheblich geringer als bei einem Nagel ohne Festhalteteil, wodurch die Arbeit rascher und einfacher ausgeführt werden kann.

Da das Festhalteteil nach dem Hereinschlagen des Nagels überflüssig ist und oft einen unerwünschten Vorsprung bildet, kann dieses durch Abbrechen entfernt werden. Bei dem bekannten Nagel ist das Festhalteteil mittels einer keilförmigen Verjüngung mit dem Kopf des Nagels verbunden. Diese keilförmige Verjüngung ist von zwei diametral einander gegenüber liegenden, schrägen flachen Flächen bestimmt. Der dadurch bestimmte verjüngte Teil ist mit seinem kleinsten Querschnitt, der den Sollbruchbereich bestimmt, mit dem Kopf des Nagels verbunden.

Das bei diesem Nagel zu verwendende Schlagwerkzeug hat eine Stützfläche, die unmittelbar in dessen Seitenfläche übergeht.

Nach dem Hereinschlagen des Nagels muß dessen Festhalteteil entfernt werden. Das könnte geschehen, indem das Schlagwerkzeug um die Stützfläche in der Weise gekippt wird, daß das Schlagwerkzeug in eine schiefe Lage gegenüber dem Nagel zu liegen kommt. Diese Kippbewegung ist nur möglich in der Ebene, die senkrecht zu den schrägen flachen Flächen des Festhalteteils steht. In der Richtung ist die Biegefestigkeit des Sollbruchbereichs am geringsten, so daß das Festhalteteil letztendlich als Folge der Überschreitung der Bruchspannung abgebrochen wird.

Es erweist sich in der Praxis allerdings als schwierig, das als Stift ausgeführte Festhalteteil mittels des Schlagwerkzeugs vom Kopf abzulösen. Zunächst muß immer die richtige Kipprichtung eingenommen werden. Weiter liefert die Anlagefläche des Schlagwerkzeugs einen Kippunkt im Abstand vom Stift, wodurch der Stift sich in dem Aufnahmeloch verklemmen kann und nur mit großem Kraftaufwand abgebrochen und entfernt werden kann. Die Gefahr in der Praxis besteht denn auch, daß der Stift direkt mit dem Hammer herabgeschlagen wird. Der abspringende Stift beschwört selbstverständlich Gefahrensituationen herauf, die zu Verletzungen führen können.

Aufgabe der Erfindung ist es deshalb, einen Nagel und dazu gehörendes Schlagwerkzeug zu schaffen, die diese Nachteile nicht aufweisen. Diese Aufgabe wird dadurch realisiert, daß der Sollbruchbereich des Nagels von einer im Grunde umlaufenden Verjüngung zwischen dem Festhalteteil und dem Kopf bestimmt wird.

Dadurch, daß die Verjüngung in allen Richtungen, in die das Schlagwerkzeug gekippt werden kann, in etwa gleich groß ist, ist immer gewährleistet, daß das Festhalteteil, vorzugsweise ein Stift, in der richtigen Weise abgebrochen werden kann. Vorzugsweise hat der Stift zu diesem Zweck beim Übergang zum Kopf eine kontinuierliche, umlaufende Nut, dies in der Weise, daß der Stift ein in allen Richtungen ungefähr gleich großes Abbruchkräftepaar hat.

Die Nut kann unterschiedliche Formen aufweisen. Insbesondere kann das Festhalteteil einen im wesentlichen konischen Teil aufweisen, dessen kleinster Querschnitt die Sollbruchfläche bestimmt. Der konische Teil ist mit seinem Ende mit dem kleinsten Querschnitt mit dem Kopf des Nagels verbunden. Die auf dem Kopf zurückbleibende Bruchfläche ragt in dem Falle kaum außerhalb des Kopfes heraus, wodurch insbesondere diese Variante als sogenannte Sichtausführung geeignet ist.

Das Abbrechen des Festhalteteils mittels des Schlagwerkzeugs kann noch weiter verbessert werden, wenn dieses Schlagwerkzeug wenigstens eine im wesentlichen flache Abschrägung aufweist, die an die Stützfläche anschließt. Insbesondere kann die Abschrägung an das Aufnahmeloch anschließen.

Jede Abschrägung und die Stützfläche bilden eine Schnittlinie, deren kürzester Abstand zur Mitte des Aufnahmelochs kleiner als der halbe Durchmesser des Kopfes des Nagels ist.

Als Folge der Abschrägung kommt der Kippunkt des Schlagwerkzeugs unmittelbar neben dem Festhalteteil auf den Kopf des Nagels zu liegen, wodurch ein Verklemmen des Festhalteteils in dem Aufnahmeloch zum Großteil vermieden wird.

Weiter kann die Stützfläche eine Schnittlinie bilden, deren kürzester Abstand zur Mitte des Aufnahmelochs kleiner als der halbe Durchmesser des Kopfes des Nagels ist.

In dem Aufnahmeloch befindet sich ein Klemmelement zum Festklemmen des hereingesteckten Festhalteteils. Das Aufnahmeloch mündet an seiner der Stützfläche abgewandten Ende in einer anderen Fläche des Schlagwerkzeugs.

Die Erfindung betrifft weiter einen Stahlnagel zur Anwendung bei der vorstehend beschriebenen Kombination, sowie das dazu gehörende Schlagwerkzeug.

Weiter wird die Erfindung im einzelnen an Hand eines in den Figuren dargestellten Ausführungsbeispiels erläutert.

Figur 1 zeigt die Kombination nach der Erfindung mit stählernem Nagel und Schlagwerkzeug in der Perspektivdarstellung.

Figur 2 zeigt den gerade vollständig hereingeschlagenen Stahlnagel.

Figur 3 zeigt das Abbrechen des Festhalteteils des Stahlnagels.

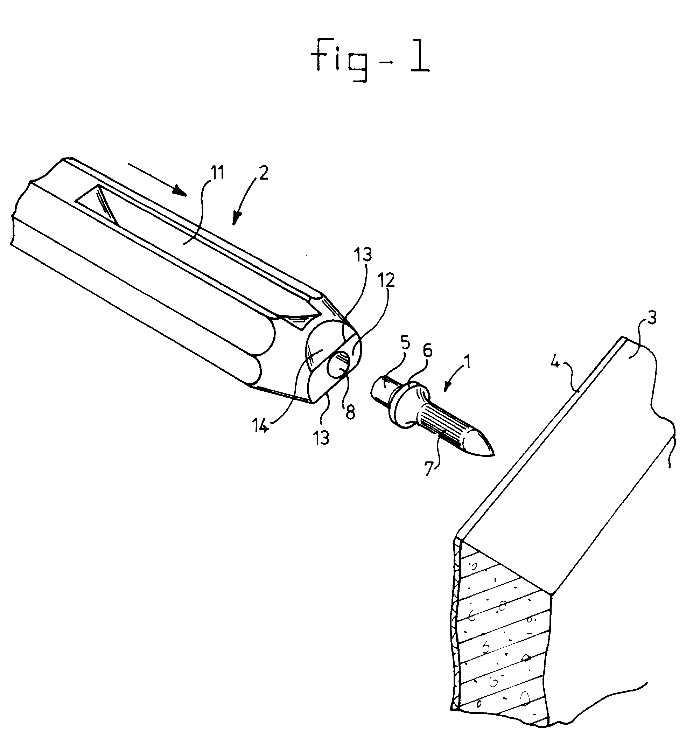

Der in der Figur 1 dargestellte Stahlnagel 1 kann mittels des Schlagwerkzeugs 2 in eine Wand 3 hineingeschlagen werden, zum Beispiel zur Befestigung eines flachen Teils wie einer Platte 4 an dieser Wand.

Der Stahlnagel 1 hat zu diesem Zweck ein Festhalteteil oder einen Stift 5, der mit dem Kopf 6 des Nagels 1 verbunden ist, der weiter in der üblichen Weise einen Schaft 7 hat. Der Stift 5 des Stahlnagels 1 kann in das Aufnahmeloch 8 des Schlagwerkzeugs 2 aufgenommen werden. An dem anderen, nicht dargestellten Ende hat dieses Schlagwerkzeug 2 eine Schlagfläche, auf die mittels beispielsweise eines Hammers Schläge ausgeübt werden können.

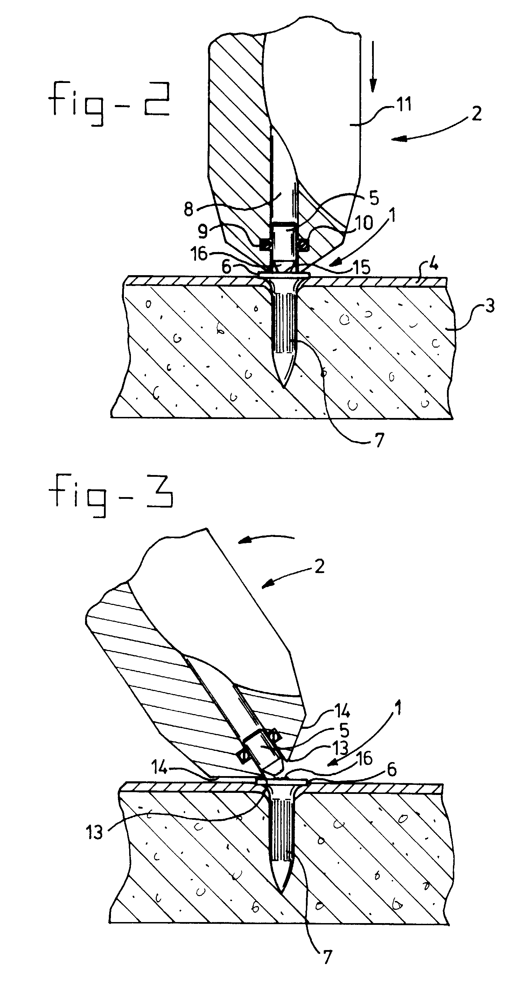

In dem in der Figur 2 dargestellten Zustand ist der Nagel 1 gerade vollständig mittels des Schlagwerkzeugs 2 und eines (nicht dargestellten) Hammers mit seinem Schaft 7 in die Wand 3 getrieben worden. Der Kopf des Nagels 1 liegt an der Außenseite an der so befestigten Platte 4 an. Der Stift 5 befindet sich immer noch in dem Aufnahmeloch 8 des Schlagwerkzeugs 2.

Wie in der Figur 2 zu sehen ist, wird dieser Stift 5 in dem Aufnahmeloch 8 mittels eines O-Rings 9 an seiner Stelle gehalten, der seinerseits sich in der Aussparung 10 in dem Loch 8 befindet.

In bekannter Weise läuft das Aufnahmeloch 8 in einen Schlitz 11 in dem Schlagwerkzeug 2 aus, dies in der Weise, daß der abgebrochene Stift 5 bequem durch weiter drücken entfernt werden kann.

Wie in der Figur 3 dargestellt, erfolgt das Abbrechen des Stifts 5, indem das Schlagwerkzeug 2 gegenüber dem Nagel 1 gekippt wird. Dieses Kippen erfolgt um einen der Leisten 13, die den Übergang zwischen der Schlagfläche 12 und den Abschrägungen 14 des Schlagwerkzeugs 2 bilden.

Wie weiter zu sehen ist in den Figuren 2 und 3 befinden sich diese Leisten 12 in Höhe des Kopfes 6 des Nagels 1 und liegen sie darauf auf. Beim Kippen des Schlagwerkzeugs 2 befindet sich der Kippunkt folglich in unmittelbarer Nähe des engsten Teils 15, das die Verbindung zwischen dem Stift 5 und dem Kopf des Nagels 1 bildet. Das Abbrechen des Stifts 5 kann denn auch ohne viel Probleme herbeigeführt werden, indem das Schlagwerkzeug 2 gekippt wird, wodurch auf dem Kopf 6 des Nagels 1 eine Bruchfläche zurückbleibt, die kaum herausragt.

Wie weiter in den Figuren 2 und 3 zu sehen ist, hat der Stift 5 einen kegelförmig sich verjüngenden Bereich 16, der bei dem bereits genannten verjüngten Teil 15 mit dem Kopf 6 des Nagels 1 verbunden ist.

Da dieser kegelförmige Teil 16 rotationssymmetrisch ist, kann das Wegbrechen des Stifts 5 in jeder beliebigen Richtung erfolgen, wobei die besten Ergebnisse erzielt werden, wenn das Schlagwerkzeug 2 um die Leisten 13 gekippt wird.

## Patentansprüche

1. In Kombination, ein Stahlnagel (1) mit einem Schaft (7), einem Kopf (6) und einem über einen Sollbruchbereich (15) abbrechbar mit dem Kopf (6) verbundenen Festhalteteil (5), sowie ein Schlagwerkzeug (2) mit an einem Ende einer Schlagfläche, worauf Schläge ausgeübt werden können mit zum Beispiel einem Hammer, und mit an dem anderen Ende einer mit einem Aufnahmeloch (8) versehenen Stützfläche (12), die auf dem Kopf (6) des Nagels (1) abgestützt werden kann und in welches Aufnahmeloch (8) das Festhalteteil (5) aufnehmbar ist, dadurch gekennzeichnet, daß der Sollbruchbereich (15) des Nagels (1) durch eine im wesentlichen umlaufende Verjüngung zwischen dem Festhalteteil (5) und dem Kopf (6) bestimmt ist.

2. Kombination nach Anspruch 1, wobei der Bruchbereich (15) durch eine kontinuierliche, umlaufende Nut bestimmt ist.

3. Kombination nach Anspruch 1 oder 2, wobei der Stift (5) einen im wesentlichen konischen Teil (16) aufweist, dessen kleinster Querschnitt den Sollbruchbereich (15) bestimmt.

4. Kombination nach Anspruch 3, wobei der konische Teil (16) mit seinem Ende mit dem kleinsten Querschnitt mit dem Kopf (6) des Nagels (1) verbunden ist.

5. Kombination nach Anspruch 3 oder 4, wobei der konische Teil (16) mit seinem Ende mit dem größten Querschnitt mit einem zylindrischen Teil verbunden ist, dessen Durchmesser auf den Durchmesser des Aufnahmelochs (8) in dem Schlagwerkzeug (2) abgestimmt ist.

6. Kombination nach einem der vorigen Ansprüche, wobei das Schlagwerkzeug (2) wenigstens eine im wesentlichen flache Abschrägung aufweist, die an die Stützfläche (12) angeschlossen ist.

7. Kombination nach Anspruch 6, wobei die Abschrägung (14) an das Aufnahmeloch grenzt.

8. Kombination nach Anspruch 7, wobei jede Abschrägung (14) und die Stützfläche (12) eine Schnittlinie (13) bilden, deren kürzester Abstand zu der Mitte des Aufnahmelochs (8) kleiner als der halbe Durchmesser des Kopfes (6) des Nagels (1) ist.

9. Kombination nach den Ansprüchen 6, 7 oder 8, wobei das Schlagwerkzeug (2) zwei einander gegenüber und zu beiden Seiten des Aufnahmelochs (8) gelegene flache Abschrägungen (14) hat.

10. Kombination nach einem der vorigen Ansprüche, wobei sich in dem Aufnahmeloch (8) ein Klemmelement (9) befindet zum Festklemmen des hereingesteckten Festhalteteils (5).

11. Kombination nach Anspruch 10, wobei das Klemmelement ein in der Wand des Lochs (8) enthaltener elastischer Ring (9) ist.

12. Kombination nach einem der vorigen Ansprüche, wobei das Aufnahmeloch (8) an seinem der Stützfläche (12) abgewandten Ende in einer anderen Fläche des Schlagwerkzeugs (2) mündet.

13. Stahlnagel (1) zur Anwendung in der Kombination nach einem der vorigen Ansprüche, welcher einen Schaft (7), einen Kopf (6), sowie ein über einen Sollbruchbereich (15) abbrechbar mit dem Kopf (6) verbundenes Festhalteteil (15), dadurch gekennzeichnet, daß der Sollbruchbereich (15) des Nagels (1) durch eine im wesentlichen umlaufende Verjüngung zwischen dem Festhalteteil (5) und dem Kopf (6) bestimmt wird.

14. Stahlnagel (1) nach Anspruch 13, wobei der Bruchbereich (15) durch eine kontinuierliche umlaufende Nut bestimmt ist.

15. Stahlnagel, wobei der Stift (5) einen im wesentlichen konischen Teil (16) aufweist, dessen kleinster Querschnitt den Sollbruchbereich (15) bestimmt.

16. Stahlnagel, wobei der konische Teil (16) mit seinem Ende mit dem kleinsten Querschnitt mit dem Kopf (6) des Nagels (1) verbunden ist.

17. Stahlnagel (1), der einen konischen Teil (16) umfaßt, der mit seinem Ende mit dem größten Querschnitt mit einem zylindrischen Teil verbunden ist, dessen Durchmesser auf den Durchmesser des Aufnahmelochs (8) in dem Schlagwerkzeug (2) abgestimmt ist.

18. Schlagwerkzeug (2) zur Anwendung in der Kombination nach einem der Ansprüche 1-12, mit an einem Ende einer Schlagfläche, auf die Schläge mit zum Beispiel einem Hammer ausgeübt werden können, und an dem anderen Ende einer Stützfläche (12), die ein Aufnahmeloch (8) für einen Festhalteteil (5) eines Stahlnagels (1) nach einem der Ansprüche 13-17 aufweist, dadurch gekennzeichnet, daß die Stützfläche (12) an wenigstens eine flache Abschrägung (14) angeschlossen ist.

19. Schlagwerkzeug (2) nach Anspruch 18, wobei wenigstens eine im wesentlichen flache Abschrägung (14) vorgesehen ist, die an die Stützfläche (12) angeschlossen ist.

20. Schlagwerkzeug (2) nach Anspruch 19, wobei die Abschrägung (14) an das Aufnahmeloch (8) anschließt.

21. Schlagwerkzeug (2) nach Anspruch 20, wobei jede Abschrägung (14) und die Stützfläche (12) eine Schnittlinie (13) bilden, deren kürzester Abstand zur Mitte des Aufnahmeochs (8) kleiner als der halbe Durchmesser des Kopfs (6) des Nagels (1) ist.

22. Schlagwerkzeug nach Anspruch 21, wobei zwei einander gegenüber und zu beiden Seiten des Aufnahmelochs (8) gelegene flache Abschrägungen (14) vorgesehen sind.

23. Schlagwerkzeug nach Anspruch 22, wobei sich in dem Aufnahmeloch (8) ein Klemmelement (9) befindet zum Festklemmen des eingesteckten Festhalteteils (5).

24. Schlagwerkzeug nach Anspruch 23, wobei das Klemmelement ein in der Wand des Lochs (8) aufgenommener elastischer Ring (9) ist.

25. Schlagwerkzeug (2), wobei das Aufnahmeloch (8) an seinem der Stützfläche (12) abgewandten Ende in einer anderen Fläche des Schlagwerkzeugs (2) mündet.
